# EUROPEAN PATENT APPLICATION

(11) **EP 2 626 613 A1**
(43) Date of publication of application: **14.08.2013**
(21) Application number: 12250028.3
(22) Date of filing: 13.02.2012
(51) Int. Cl.: F16L 55/34

(54) **Pipeline crawler**

(71) Applicant: BP Exploration Operating Company Limited, Sunbury on Thames, Middlesex TW16 7BP (GB)
(72) Inventor: Azarbadegan, Alireza, Surrey, KT 22 7 NL (GB)
(74) Representative: Collins, Frances Mary

(57) **Abstract**

A pipeline crawler (1000) is described. In particular examples the pipeline crawler is annular and includes a fluid bypass so fluid can continue to flow along the pipe whilst the crawler (1000) is working. Still more particularly the invention provides a pipe crawler comprising at least two anchor bodies (800, 800') each comprising a gripping actuator operable to grip a pipe to anchor the crawler in the pipe and to release its grip to enable the anchor body to be moved along the pipe; a plurality of flexible arms (804, 814, 816, 838, 846) coupled between the anchor bodies (800, 800'), wherein each flexible arm comprises: an extension actuator (830) operable to lengthen or shorten the arm; and, an elongate bendable member which extends longitudinally along a part of the arm such that the flexible arm can flex by bending of the elongate bendable member; a controller (802, 802') coupled to control the gripping actuators and the extension actuators (830) to move the crawler along the pipe.

## Description

This invention relates to apparatus for inspection or maintenance of pipes. More particularly the invention relates to a crawler which is to be passed through a pipe to carry out functions inside the pipe, such as inspection, cleaning (e.g. removal of blockages) or repair work.

Pipelines carry oil and other fluids for long distances and may need to cross inhospitable terrain such as deserts or regions of the sea bed. Blockages in the pipes interrupt or slow the transport of fluid and may cause damage to pumping stations. Degradation of the pipes may result in undesirable contamination of the environment, or of the fluid itself. Addressing these problems requires access to the interior of the pipe, preferably without the need to interrupt fluid transport.

To obtain access to the interior of the pipe devices, known as pipe crawlers or pigs, are loaded into the pipes and controlled to travel along the pipes carrying inspection equipment and/or clearing blockages as they go. Many different types of pipe tool exist today; they are typically called crawlers or tractors. Existing pipe crawlers can be deployed into the pipe on the end of a long umbilical (such as coiled tubing or electric cable) or can be self-propelled and not, therefore, connected by an umbilical.

Existing pipe crawlers typically have a diameter which is similar to the internal diameter of the pipe and a central shaft so they tend to block the pipe. This means that existing crawlers cannot stay inside the pipe while the pipe is in normal use.

It has been proposed to use fluid pressure in the pipe to push a crawler along. However this method cannot be applied to blocked pipes and can only be used to travel down stream, with the direction of the fluid flow. It has also been proposed to use wheels or rollers to move a crawler along a pipe. However, where pipes are inclined or of unusual geometry wheeled crawlers may become stuck. In answer to these problems it has also been proposed to use a reciprocating motion in combination with selective gripping of the walls of the pipe to move the crawler by a walking motion. These "walking" crawlers are particularly useful in risers from subsea pipes or in other circumstances where high gripping force is required. However walking crawlers are generally slower moving than wheeled crawlers and are generally unsuitable for negotiating junctions or tight bends in pipe work.

US Patent 5018451 relates to an extendable pipe crawler having a front leg assembly and a back leg assembly connected together by two air cylinders, each leg assembly having four extendable legs and a pair of actuators for sliding the extendable legs radially outward to increase the range of the legs when the pipe crawler enters a section of a pipe having a larger diameter. This walking crawler crawls by "inchworm"-like motion, the front leg assembly and back leg assembly alternately engaging and disengaging the wall of the pipe to hold the pipe crawler as the air cylinders alternately advance the front leg assembly and bring up the rear leg assembly.

The speed of this crawler and other walking crawlers is limited by the difference between its fully contracted and fully extended length, this can be thought of as its stride length. A longer stride means a faster crawler. Conversely to be able to negotiate tight bends a shorter stride length is required. Thus, the inventors in the present case have identified a need for a rapidly moving crawler which is able to negotiate tight bends in pipe lines.

Embodiments of the invention described herein enable the provision of crawlers which need not include a central shaft and so facilitate fluid flow in the pipe through the crawler.

Aspects and embodiments of the invention are set out in the claims.

In an aspect there is provided a pipe crawler comprising at least two anchor bodies each comprising a gripping actuator operable to grip a pipe to anchor the crawler in the pipe and to release its grip to enable the anchor body to be moved along the pipe; a plurality of flexible arms coupled between the anchor bodies, wherein each flexible arm comprises: an extension actuator operable to lengthen or shorten the the arm; and, an elongate bendable member which extends longitudinally along a part of the arm such that the flexible arm can flex by bending of the elongate bendable member; a controller coupled to control the gripping actuators and the extension actuators to move the crawler along the pipe. In some embodiments the bendable member is configured to resist buckling under longitudinal compression so that extension of the extension actuator lengthens the span of the arm to increase the separation of the anchor bodies. These and other embodiments of the invention have the advantage that the crawler can conform to the shape of a pipe to accommodate bends without compromising the stride length or efficiency of the crawler.

In some embodiments being configured to resist buckling comprises being resilient. In some embodiments being configured to resist buckling comprises having a length, second moment of area and elastic modulus selected based on the mass and or the rolling resistance of one of the anchor bodies. In some embodiments the bendable members are configured such that the critical force required to bend the column is less than the rolling resistance of one of the anchor bodies.

In some embodiments the bendable members comprise a plurality of articulating links as described herein below. The crawler may also comprise an articulation actuator operable to bend the arm, the articulation actuator may be carried in the bendable member, in the flexible arm, in the linear actuator, or in one of the anchor bodies. In these and other embodiments the controller may be configured to control the articulation actuator to control bending of the arm.

In some embodiments the bendable member is configured so the critical compressive stress in the direction of the length of the arm that is required to buckle the bendable member is greater than a threshold value selected based on the rolling resistance of one of the anchor bodies.

In some embodiments the bendable member comprises a controllable support operable to modify the rigidity of the bendable member. In some embodiments the bendable member comprises an internal cavity extending along it. The controllable support may comprise a fluid, contained in the cavity wherein pressurising the fluid in the cavity modifies the rigidity of the bendable member to inhibit it from buckling. These and other embodiments of the invention have the advantage of enabling the pipe crawler to negotiate tight bends whilst also providing a robust tool able to apply high pushing forces.

In some embodiments the bendable members comprise a plurality of articulating links and an articulation actuator operable to bend the arm by articulating the links.

In an aspect there is provided a pipe crawler comprising
at least two anchor bodies each comprising a gripping actuator operable to grip a pipe to anchor the crawler in the pipe and to release its grip to enable the anchor body to be moved along the pipe;
an articulating arm coupled between the anchor bodies, said articulating arm comprising: a plurality of articulating links, at least one extension actuator operable to lengthen or shorten the arm and an articulation actuator operable to bend the arm;
a controller coupled to control the gripping actuators and the extension actuators to move the crawler along the pipe.

This crawler has the advantage that each anchor body can be both linearly displaced and angularly deflected with respect to the other anchor body. The inventors in the present case have realised that this has the advantage that a crawler with a long stride length can negotiate very tight bends (e.g. bends with a small radius of curvature). In addition, this arrangement has the further advantage that the direction of the crawler at a T-junction or branching fork in a pipe can be more easily controlled. Preferably the articulating links are arranged such that the arm is operable to bend in two non collinear bend directions. This and other embodiments of the invention have the advantage that the crawler can negotiate bends and junctions of any orientation, e.g. horizontal and/or vertical bends.

In some embodiments the crawler may comprise a plurality of articulating arms, for embodiment two or at least three articulating arms coupled in parallel between said at least two anchor bodies. This has the advantage that the crawler is better able to negotiate vertical bends and junctions in pipes. In some embodiments the two non collinear bend directions comprise first and second bend directions and the arms are arranged such that the first bend direction of each of the articulating arms is aligned with the first bend direction of the respective other arms and the second bend direction of each of the articulating arms is aligned with the second bend direction of the respective other arms such that the degrees of freedom of one anchor body with respect to the other is the same as the number of degrees of freedom of each of the arms. This has the advantage of providing a pipe crawler of improved manoeuvrability and efficiency.

In some embodiments the articulating arms comprise drive wires arranged such that the drive wires are operable to cause bending of the arms in at least one of the first and second bend directions. In this and other embodiments the bodies and/or the arms may comprise motors arranged to control the drive wires and the controller is configured to control the motors. This has the advantage that the controller can control the shape and length of the crawler.

In some embodiments the arms each comprise a plurality of linear actuators distributed along the length of the arm. This has the advantage that an anchor body can be directed around and extended into sharp bends in pipes.

Preferably the crawler comprises a fluid bypass to allow fluid in the pipe to flow through the crawler. In some embodiments the area of the cross section of the fluid bypass is at least 50% of the total area of the cross section of the crawler. In some embodiments the anchor bodies are annular and the fluid bypass is provided through the annulus. In some embodiments the fluid bypass comprises a power generation means arranged to derive power from fluid flowing through the fluid bypass. In some embodiments the crawler comprises a pressure sensor operable to sense the pressure drop across the crawler and the controller is configured to control the gripping actuator based on the sensed pressure drop. This has the advantage of conserving power because in the presence of a small pressure drop, the drag force from the fluid in the pipe may be relatively small and so there is no need to expend energy gripping the pipe whilst in the presence of a large pressure drop more power can be applied to the gripping actuators.

Some embodiments will now be described, by way of example only, with reference to the accompanying drawings, in which:
Figure 1 shows the basic structure of a pipe crawler;
Figure 2A and Figure 2B illustrate two possibilities for gripping actuators;
Figure 3 illustrates an arrangement of gripping actuators;
Figure 4A illustrates a partly exploded view of an anchor body having gripping actuators;
Figure 4B is a side view of the anchor body shown in Figure 4A;
Figure 5 illustrates a crawler; and
Figure 7 illustrates another embodiment of a crawler.

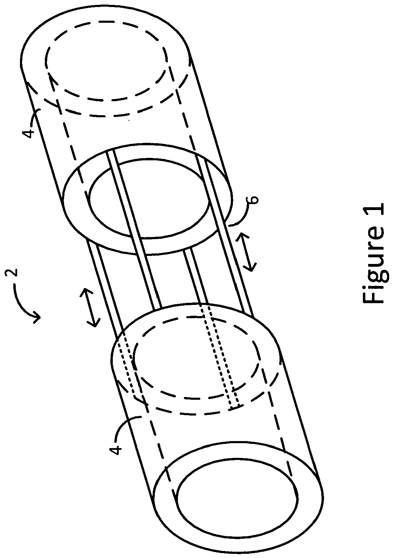

Figure 1 shows a crawler 2 having two anchor bodies 4, 4' linked by a plurality of linkages 6.

In use the crawler is positioned in a pipe (not shown) and a first anchor body 4 is caused to grip the pipe. The second anchor body 4' releases its grip on the pipe and the linkages 6 are actuated to translate the second anchor body 4' along the pipe with respect to the first anchor body 4'. The second anchor body 4' is then controlled to grip the pipe and the first anchor body 4 is controlled to release its grip on the pipe. The linkages 6 are then actuated to translate the first anchor body 4 along the pipe with respect to the second anchor body 4. Repetition of this cycle causes the crawler 2 to walk along the pipe. The linkages of Figure 1 may comprise articulating arms.

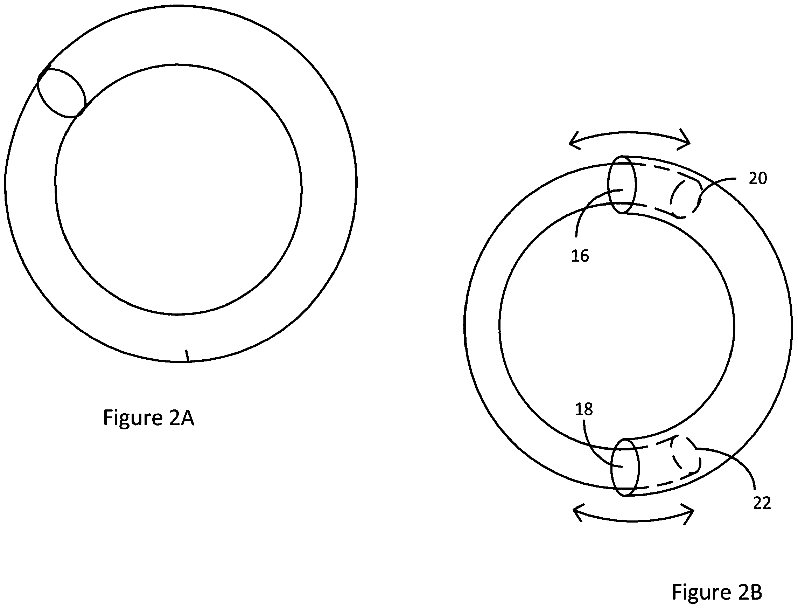

Figure 2A shows an anchor body 40. The anchor body 40 comprises a flexible tube having a mouth 44 and a tail 46. The flexible tube is arranged in a circle with the tail 46 of the tube extending into the mouth 44. In this telescopic arrangement the anchor body 40 can be compressed (reducing its circumference and diameter) by drawing the tail 46 of the tube further into the mouth 44; or expanded by pushing the tail 46 further out from the mouth 44.

An actuator 42 inside the mouth of the flexible tube is operable to draw the tail further into the mouth to contract the body or to push the tail further out of the mouth to expand the body. The actuator 42 may comprise an electromechanical actuator such as a solenoid actuator or an electric motor with a worm gear adapted to push/pull the tail into/out of the mouth. In some cases hydraulic or pneumatic actuators may be used.

Figure 2B shows another embodiment of an anchor body 20 comprising a first tube section 22 and a second tube section 20'. The ends of the second tube section 20' fit inside the ends of the first tube section 20 and actuators 16, 18 are arranged inside the first tube section and are operable to draw the second tube section into the first tube section to contract the anchor body. The actuators 16, 18 are further operable to urge the second tube section out from inside the first tube section to expand the anchor body.

In operation, for the anchor body to grip the pipe the actuators 16, 18 are controlled to urge the second tube section 20' out of the first tube section 20. To release the grip on the walls of the pipe, the actuators 16, 18 can be controlled to draw the second tube 20' into the first tube 20. In the embodiment of Figures 1 and 2 the actuators which cause the anchor body to grip and release the pipe by expansion or contraction are controlled by a microprocessor carried in the anchor body. However, a microprocessor is optional and simple servo-motors (which may be radio controlled or controlled by other remote communication) or any other electromechanical control means will do.

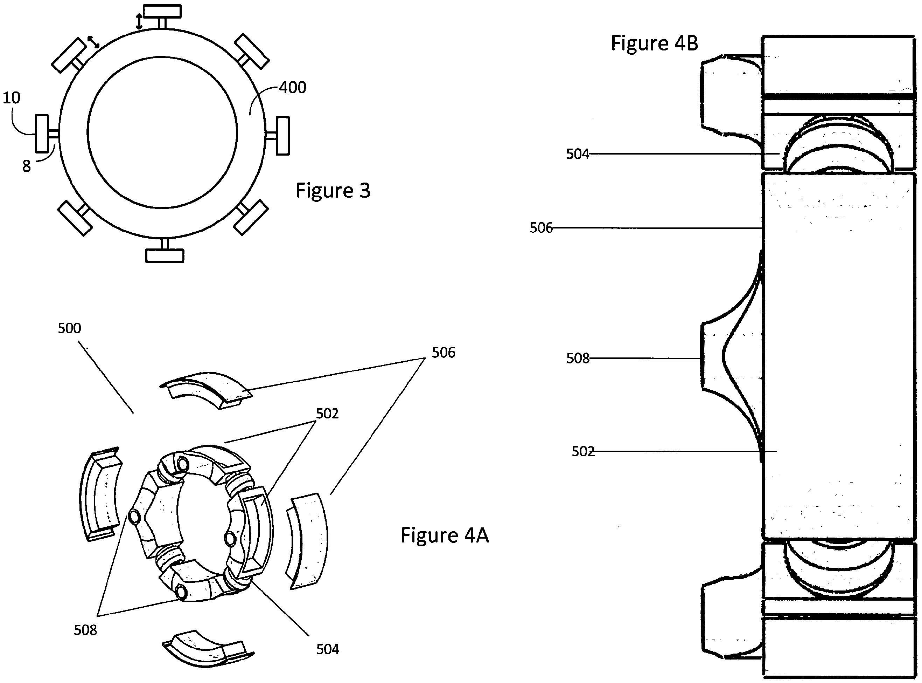

Figure 3 shows an anchor body 400 having a plurality of extensible feet 10 and a plurality of linear actuators 8. The anchor body 400 is annular so that, when the apparatus is in use in a pipe fluid can still flow along the pipe through the annulus. Each of the feet 10 is coupled to the outer wall of the annular body by a respective one of the plurality of linear actuators 8 so that each foot 10 can be moved radially by the actuators 8.

The linear actuators 8 are operable to draw the feet 10 radially inwards to retract the feet, or to drive them radially outwards. The anchor body comprises a controller such as a microprocessor or other electronic control means which is coupled to the actuators to control actuation of the feet.

In operation, to grip a pipe the controller controls the actuators 8 to urge the feet 10 outwards to engage with the pipe. To release the pipe, the controller controls the actuators 8 to draw the feet 10 inwards.

Figure 4A shows a partly exploded perspective view of an anchor body 500 having four gripping actuators 502 arranged in a ring. Coupled to the anchor body between each actuator is a wheel 504.

The gripping actuators 502 are pneumatically actuated by pressurised air (or another fluid) provided to inlet points 508 disposed on each actuator 502. The outer radial edge of each gripping actuator 502 carries a foot 506 which provide friction pads (as do the feet 10 in Figure 3) to grip a pipe. The actuators 502 can be operated by pneumatic pressure to urge the feet 506 radially outward from the ring arrangement to engage with and grip the pipe. When the pneumatic pressure is reduced the feet 506 are drawn radially inwards to disengage from the pipe to permit the anchor body to move.

The wheels 504 provide casters which allow the anchor body to roll along the pipe when the gripping actuators are disengaged to release the pipe. The wheels are spring loaded so that they are biased radially outward to engage with the pipe and to prevent the friction pads 506 from dragging on the pipe when they are withdrawn. The spring loading also helps to accommodate for variations in the pipe diameter. The wheels need not stand proud of the anchor body.

Figure 4B shows a side view of the anchor body shown in Figure 4A and, in Figure 4A and Figure 4B like reference numerals are used to indicate like elements.

Figures 2, 3, 4A and 4B provide embodiments of anchor bodies which can be used. Other geometric configurations are possible, for example the anchor bodies need not be annular and may comprise only sections of an annular body joined by struts. In some cases the anchor body may not be ring shaped at all and may comprise two (or more) linear actuators arranged such that, when the crawler is in position in a pipe, the linear actuators span the pipe to engage with the pipe circumference at different points. Other means of selectively anchoring a body in a pipe will be apparent to the skilled reader in the context of the present disclosure. In addition, although pneumatic actuation has been described other types of actuators may be used such as electric motors, solenoids or other mechanical or electromechanical devices.

As shown in Figures 1 to 4B the crawler may have annular anchor bodies, made up of sleeves or rings. Thus, although the crawler blocks fluid flow close to the inside surface of the pipe, fluid can still flow through the middle of the pipe.

In one possibility the crawler has at least two annular anchor bodies arranged adjacent each other along a longitudinal axis so that the anchor bodies are coaxial. The anchor bodies are connected to each other by extendable connectors/linkages, such as pistons (linear actuators), which can be powered pneumatically, electrically or electro-pneumatically.

As shown in Figures 2 to 4B each anchor body can be expanded so that it can have a larger circumference. In this way, when a anchor body is contracted, it can move freely through the pipe, but when it is expanded it can engage the interior wall of the pipe so as to be relatively fixed to the pipe wall.

Each anchor body may comprise an inner frame, ring or sleeve to which radially extendable feet, plates, grippers or the like are attached. The extendable feet/plates/grippers (such as feet 10 in Figure 3 or feet 506 in Figure 4A) are the parts which can be extended or can be retracted so as to allow the anchor body to selectively frictionally engage with (e.g. to grip) the pipe wall. The feet/plates/grippers may include magnets (permanent or selectively activated electromagnets) to help engagement with the pipe wall.

Where the anchor body is annular it may have an iris like shutter, operable to close the opening through the annular anchor body to form a plate blockage in the pipe. For example, several plates can be provided on at least one of the anchor bodies which can fold in (much like the petals of a flower, or in the manner of a camera shutter) to form a closed end to the anchor body. In this way, when fluid is flowing in the pipe, the pressure of the fluid acting on the closed end of the crawler can be used to push the crawler through the pipe rather than moving the crawler incrementally as described above.

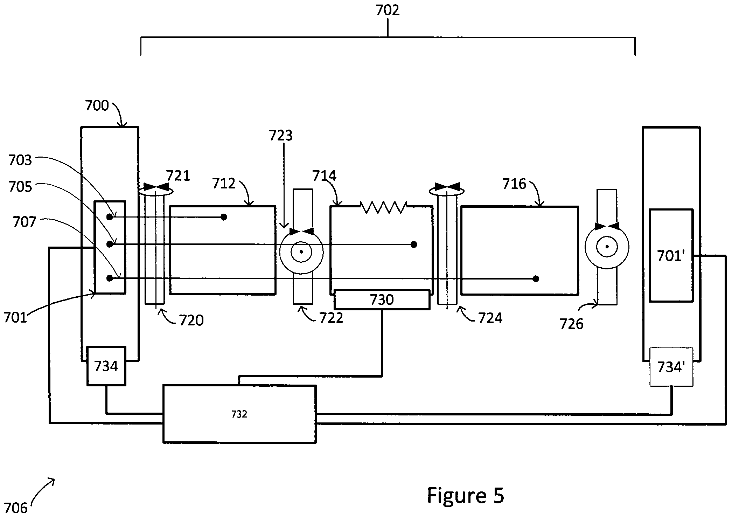

Figure 5 shows a very schematic plan view of a crawler 706 in use in a pipe. The crawler 706 comprises two anchor bodies 700, 700' joined by an articulating arm 702. For clarity, in Figure 5 only one articulating arm is shown. However, it is expected that more than one arm, for example two, three or four arms, or more may be present.

The articulating arm 702 comprises a plurality of articulating links, 712, 716, 718 at least one of which 714 is linearly extensible so that the arm 702 can be extended or contracted in length.

The two anchor bodies 700, 700' have gripping actuators 734, 734' which operate in the manner described above with reference to the feet 10, 506 and actuators 8, 502 of Figures 3 and 4. The anchor bodies 700, 700' each comprise a drive unit 701, 701' coupled to control motor drive wires 703, 705, 707, to control articulation of the articulating links. The crawler comprises a controller 732 which is coupled to control the gripping actuators 734, 734' and the drive units 700.

The articulating arm 702 comprises three articulating links 712, 716, 718. The first articulating link 712 is coupled to the first anchor body 700 with a hinged coupling 720 so that it is operable to pivot with respect to the anchor body in a first bend direction 721, perpendicular to the hinge 720. The drive wire 703 links the drive unit 701 to the first articulating link 712.

The second articulating link 714 is coupled to the first articulating link 712 by a hinged coupling 722 so that the second articulating link is operable to pivot with respect to the first articulating link 712 in a second bend direction 723. The second bend direction is non-collinear with the first bend direction. The drive wire 705 links the drive unit 701 to the second articulating link 714. The second articulating 714 link is extensible and compressible and comprises a linear actuator 730. The linear actuator 730 is operable to control the extension or compression of the second articulating link 714. The linear actuators 730 in the articulating arms are linear solenoid actuators of the spring return type. The linear actuators have a 40cm stroke length and are each operable to exert a 210N force. Typically these actuators are not more than 4cm x 50cm x 15cm in size (actuated along the 50cm dimension)

The third articulating link 716 is coupled to the second articulating link by a hinged coupling 724 so that the third articulating link is operable to pivot with respect to the second articulating link 714 in the first bend direction 721. The drive wire 707 links the drive unit 701 to the third articulating link 716. The third articulating link 716 is also coupled to the second anchor body by a hinged coupling 726 so that the third articulating link 716 is operable to pivot with respect to the second anchor body 700' in the second bend direction 723.

The drive unit 701, via the drive wire 703, is operable to control deflection of the first articulating link 712 about the first bend direction. Similarly, via the drive wires 705, 707 the drive unit 701 is also operable to control deflection of the articulating links 714, 716. Although not shown in Figure 5 to avoid crowding the drawing, drive unit 701' may also be coupled by drive wires to control bending of the articulating arm 700.

By appropriate control of the drive wires 703, 705, 707, and the linear actuator 730 the length and shape of the articulating arm can be controlled. The articulating links may be provided by one or more robotic arms, also known as "snake arms", such as those described in International patent application, publication number W02010001114, which is hereby incorporated by reference. As an alternative, or in addition to a linear actuator being incorporated into a link of the articulating arm the linear actuator 730 may be provided separately, for example a linear actuator may be coupled between an anchor body and an articulating arm comprising a plurality of articulating links. Although the actuators have been described as solenoid actuators of a spring-return type, other types of actuators may be used, for example pneumatic or hydraulic actuators, servo motors or other types of powered mechanical/electromechanical devices may be used. The actuators need not be spring return.

Typically the anchor bodies 700, 700' of the crawler are configured to operate within a pipe having an internal diameter of 16" (40.6cm). The anchor bodies may comprise power or control units or the power or control units may be provided separately e.g. some of the anchor bodies may comprise gripping actuators as described above with reference to Figures 2 to 6 and others may carry power sources such as compressed air or batteries. The power and control bodies may carry gripping actuators.

The crawler may also comprise four power or control bodies carrying a power supply and/or.the control electronics for controlling operation of the crawler. In one exemplary embodiment, the total mass of this crawler may be approximately 400Kg. The force necessary to move this assembly along the pipe is about 860N. In this embodiment, the gripping actuators may be of a spring return type operable to extend between 1cm and 1.5cm and to exert a force of 1kN. Typically the gripping actuators are not more than 4cm x 15cm x 10cm (actuated along the 4cm dimension), but they may be of any desired size. The crawler could have two mechanism where wheels can contract away in when not in use which could allow more efficient movement in near horizontal sections whilst the grippers could be used where high torque is required in the near vertical sections.

The crawler 706 shown in Figure 5 comprises two anchor bodies 700, however more bodies may be included in the crawler. The additional bodies may be similar to those described with reference to any of the foregoing Figures or may comprise power storage units such as batteries, fuel cells or compresses air units for providing power to the other anchor bodies in the crawler. For clarity, in Figure 5 only one articulating arm is shown. However, it is expected that more than one arm, for example two, three or four arms, or more may be present. The articulating arm 702 is shown as comprising three articulating links, 712, 716, 718 however in some cases only two such links may be present or a far higher number of links may be used. In Figure 5 the linear actuator is incorporated into one of the articulating links however in some cases the linear actuator may be provided separately e.g. the linear actuator may be joined to the anchor bodies by articulating arms which may not themselves include such an actuator. Although only one link is shown as including a linear actuator in some cases a plurality of the links may be linearly extensible and comprise a linear actuator. This has the advantage of providing a linkage of improved manoeuvrability.

The anchor bodies 700, 700' may each comprise a drive unit 701, 701' coupled to control motor drive wires 703, 705, 707 but in some cases only one such drive unit may be present or the functionality may be distributed between drive units, e.g. one unit my control deflection along one bend direction and/or at a particular hinge joint whilst the other controls deflection along another bend direction and/or at another hinge joint. This has the advantage of simplifying the control mechanism and reducing the number of driven/moving parts in the crawler thereby simplifying maintenance. In some cases both drive units are coupled to operate in concert so that they work together to bend the arm in a particular way. This has the advantage that additional power can be applied.

The articulating arms have been described as being under active control but they may simply be passive (i.e. not driven or actively controlled). Where drive units are provided, the drive units for controlling deflection/bending of the articulating arms may comprise electric motors. In some cases the drive units may be provided in the links themselves rather than being in the anchor bodies. These embodiments of the invention have the advantage of being more straightforward to maintain because, in the event of failure of an arm the whole arm can be removed and replaced.

The articulating arms may carry power couplings to carry electric power between bodies. In addition the articulating arms may carry control/communication couplings in the form of a control loom or other communications BUS to enable control signals to be passed along the crawler. These couplings provide the advantage that power stores (e.g. batteries), control electronics and drive units need not be carried in the anchor bodies so weight and functionality can be distributed throughout the crawler.

In Figure 5 the hinged couplings 720, 722, 724, 726 are shown as providing only two non-collinear bend directions. However in some cases a greater number of bend directions may be selected. For example the third hinged coupling may be arranged so that the bend direction associated with that hinge is non collinear with both the first and second bend directions, additional hinges may add additional bend directions in similar fashion.

The linear actuator 730 is described as having a 40cm stroke length but longer or shorter stroke lengths may be used, for example a stroke length of between 20cm and 1 metre may be particularly advantageous, particularly in pipe bends having a radius of curvature in the range of 1 metre to 20 metres. Typically the linear actuators are each operable to exert a 210N force, however greater or lesser force may be provided for example actuators may provide a force in the range of between 50N to 400N.

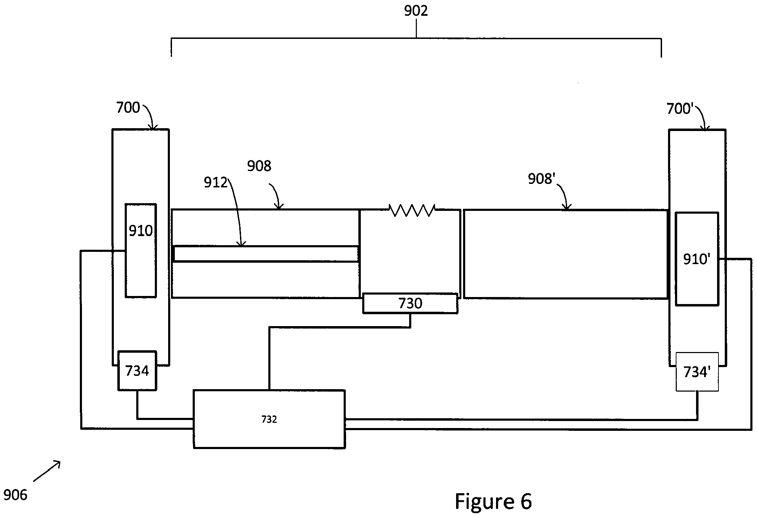

Figure 6 shows a pipe crawler 906 having two anchor bodies 700, 700' linked by a flexible arm 902 including a linear actuator 730. In Figure 6 and Figure 5 like reference numerals are used to indicate like elements.

The linear actuator 730 is linked to the first anchor body 700 by a bendable member 908. The bendable member comprises an elongate, flexible but resilient coated steel arm. The bendable member 908 includes an internal cavity 912 filled with a hydraulic fluid. A hydraulic pump 910 is coupled to the cavity. A controller 732 is coupled to control the hydraulic

The cavity acts to modify the rigidity of the bendable member. In a passive sense the cavity does this simply by changing the shape of the cross section, and hence the second moment of area of the bendable members cross section. The second moment of area is also referred to as the area moment of inertia. The cavity may also act in an active sense because the hydraulic pump 910 is operable to control the pressure of the fluid in the cavity 912.

As will be understood by the skilled reader in the context of the present disclosure, the ability of a column or other rigid support to support a compressive load without buckling is dependent upon (*inter alia*) its unsupported length, its elastic modulus and its moment of area.

In operation the hydraulic pump 910 is operable to control the pressure of hydraulic fluid in the cavity 912 and, by so doing, to modify the elastic modulus of the bendable member. The inventor in the present case has appreciated that, this is technically advantageous because when the pipe crawler is being driven forward against strong resistance (such as a blockage or restriction in the pipe) there is a need for the flexible arms of the crawler to be more rigid, or at least more resilient with a relatively higher elastic modulus so that they can resist buckling under the load. However, when the pipe crawler needs to negotiate tight corners or bends in pipe work it is advantageous for the arms to be more flexible. Thus, in operation the fluid in the cavity 912 can be maintained at a pressure selected to ensure that the arms of the crawler are rigid, or flexible depending on the application.

To increase the rigidity of the arms the controller 732 controls the pump 910 to pressurise the fluid in the cavity 912. To decrease the rigidity of the arms the controller 732 controls the pump to decrease the pressure of the fluid in the cavity 912. The pipe crawler 906 is shown as having two anchor bodies 700, 700' but of course, any number of anchor bodies may be used. In addition anchor bodies having fewer or more components may also be present such as those described with reference to Figure 2 and Figure 3, above. The flexible arm 902 is shown as including one linear actuator 730 but a greater number of linear actuators may be present and they may be distributed at any point along the length of the arm. The linear actuator is shown as being disposed on the arm but additionally or alternatively a linear actuator may be coupled directly to one of the anchor bodies.

The arm 902 is shown as including two bendable members 908, 908' but a single one may be used instead. Of course, in some cases a greater number may be provided. The bendable member is described as being provided by a coated steel arm but other materials may be used and the coating is optional, depending on the application for which the crawler is to be used. The bendable member 908 includes an internal cavity but this cavity also, is optional. Whilst the cavity 912 may be filled with a hydraulic fluid this is not necessary, as described above - the mere presence of the cavity will modify the rigidity of the bendable member so as to inhibit buckling. The cavity need not be fully enclosed (e.g. the bendable member need not fully surround the cavity) in some cases H-beam or I-beam configurations maybe used.

As described above, if the cavity contains a hydraulic fluid, a hydraulic pump 910 may be coupled to the cavity to control the pressure of that fluid. Such a pump is not necessary. The cavity may simply be filled with a cavity at a selected pressure. In some such embodiments the pressure may be adjustable by a pressure control means such as a valve or regulator so that, prior to disposing the tool in a pipe, the rigidity of the bendable members can be selected based on circumstances. Other variations and modifications will be apparent to the skilled reader in the context of the present disclosure. One such modification, for example, would be to combine one or more of the articulating arms described above with reference to Figure 5 with one or more of the bendable members 908.

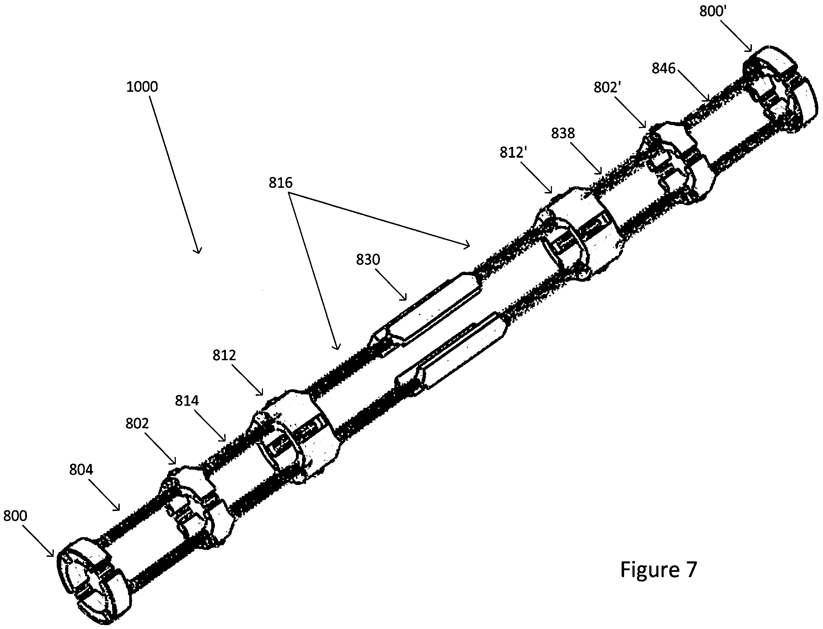

Figure 7 shows an embodiment of a crawler 1000 comprising two of anchor bodies 800, 800' which operate as the anchor bodies described above with reference to Figure 4. The anchor bodies 800 are arranged at opposite ends of the crawler 1000.

The first anchor body 800 is coupled to a controller 802 by a set of four articulating arms 804. The controller 802 is coupled to a power provider 812 by further set of four articulating arms 814. The power provider 812 is coupled by another set of four articulating arms to a second power provider 812'. The four articulating arms each comprise a linear actuator 830. Each of the linear actuators 830 is independently controllable and in one exemplary embodiment, may be operable to exert a 210N force over a 40cm stroke length. The second power provider 812' is coupled by four articulating arms 838 to a second controller 802'. The second controller 802' is coupled to the second anchor body 800' by four articulating arms 846.

The power provider units 812, 812' comprise compressed air supplies and batteries for providing power to the anchor bodies 800, 800', the linear actuators 830, the controller units 802, 802', and the drives for the articulating arms.

The controller units 802, 802' carry memory, microprocessors and communications electronics for communicating command signals to the anchor bodies and the articulating arms. The controller units also comprise a longer range communications interface, such as an RF interface (e.g. GSM and/or IEEE 102.11x interface) for communicating command signals and data with a control system outside the pipe or at a pipeline head. The example shown in Figure 7 is merely one particularly advantageous configuration and other examples are possible. For example a greater or lesser number of arms and actuators may be used. A smaller or larger number of anchor bodies may be provided and methods of actuation other than compressed air may be used, for example other compressed fluids may be used or solenoid actuators powered by batteries. Other variations and modifications will be apparent to the skilled reader.

## Claims

1. A pipe crawler comprising
at least two anchor bodies each comprising a gripping actuator operable to grip a pipe to anchor the crawler in the pipe and to release its grip to enable the anchor body to be moved along the pipe;
a plurality of flexible arms coupled between the anchor bodies, wherein each flexible arm comprises:
an extension actuator operable to lengthen or shorten the arm; and,
an elongate bendable member which extends longitudinally along a part of the arm such that the flexible arm can flex by bending of the elongate bendable member;
a controller coupled to control the gripping actuators and the extension actuators to move the crawler along the pipe.

2. The pipe crawler of claim 1 wherein the bendable member is resilient so that it resists buckling under compressive stress in the direction of the length of the arm.

3. The pipe crawler of claim 1 or 2 wherein one of a length, a second moment of area and an elastic modulus of the bendable member are selected based on the mass and/or the rolling resistance of one of the anchor bodies

4. The pipe crawler of claim 1, 2 or 3 wherein the bendable member is configured so the critical compressive stress in the direction of the length of the arm that is required to buckle the bendable member is greater than a threshold value selected based on the rolling resistance of one of the anchor bodies.

5. The pipe crawler of any preceding claim in which the bendable member comprises a controllable support operable to modify the rigidity of the bendable member, for example wherein the bendable member comprises an internal cavity extending along it, for example wherein the controllable support comprises a fluid, contained in the cavity wherein pressurising the fluid in the cavity modifies the rigidity of the bendable member to inhibit it from buckling.

6. The pipe crawler of any preceding claim in which the bendable members comprise a plurality of articulating links and an articulation actuator operable to bend the arm by articulating the links.

7. A pipe crawler comprising
first and second anchor bodies each comprising a gripping actuator operable to grip a pipe to anchor the crawler in the pipe and to release its grip to enable the anchor body to be moved along the pipe;
an articulating arm coupled between the anchor bodies, said articulating arm comprising: a plurality of articulating links, at least one extension actuator operable to lengthen or shorten the arm and an articulation actuator operable to bend the arm; and
a controller coupled to control the gripping actuators, the articulation actuator and the extension actuators to move the crawler along the pipe.

8. The pipe crawler of claim 7 wherein the articulating arm includes the bendable member of claim 1, for example in which the crawler comprises the features of any of claims 2 to 6.

9. The pipe crawler of claim 7 wherein the articulating arm is arranged such that the arm is operable to linearly displace the first and second anchor bodies with respect to each other and to angularly deflect the at least two anchor bodies with respect to each other to bend the crawler.

10. The pipe crawler of any preceding claim in which the anchor bodies are annular to provide a fluid bypass through the crawler for fluid flowing in the pipe, for example in which the arms linking the anchor bodies are arranged in an annular space defined between the anchor bodies.

11. The pipe crawler of any preceding claim comprising at least three arms coupled between the at least two anchor bodies.

12. The pipe crawler of claim 11 as dependent on claim 7 in which the articulating links are arranged such that the articulating arms are operable to bend in at least two non collinear bend directions, for example wherein the two non collinear bend directions comprise first and second bend directions and the arms are arranged such that the first bend direction of each of the articulating arms is aligned with the first bend direction of the respective other arms and the second bend direction of each of the articulating arms is aligned with the second bend direction of the respective other arms such that the degrees of freedom of one anchor body with respect to the other is the same as the number of degrees of freedom of each of the arms.

13. The pipe crawler of any preceding claim in which the arms comprise at least one of: snake arms; and a plurality of linear actuators distributed along the length of the arm.

14. The pipe crawler of any preceding claim comprising a power provider unit coupled between said at least two anchor bodies by a plurality of articulating arms, for example wherein the power provider unit comprises at least one of: a supply of compressed air, a battery and a fuel cell, for example wherein the power provider unit is annular to provide a fluid bypass through the crawler for fluid flowing in the pipe.

15. The pipe crawler of any preceding claim in which the gripping actuator is operable to expand the anchor body so that the body grips the pipe, for example wherein the anchor body comprises a tube like member arranged in an annular configuration ring and in which expanding the anchor body comprises displacing the ends of the tube like member with respect to each other for example wherein the anchor body comprises two tube members arranged as sectors of a ring and in which expanding the anchor body comprises displacing at least one end of one of the two tube like members with respect to a corresponding end of the other tube like member, for example in which the two tube members arranged as sectors are substantially U-shaped.
